Europäisches Patentamt

European Patent Office

Office européen des brevets

(11) Veröffentlichungsnummer: **0 330 133**
**A2**

(12) **EUROPÄISCHE PATENTANMELDUNG**

(21) Anmeldenummer: **89102958.9**

(22) Anmeldetag: **21.02.89**

(51) Int. Cl.4: **F16D 59/00 , B66B 9/08**

(30) Priorität: **25.02.88 CH 698/88**

(43) Veröffentlichungstag der Anmeldung:
**30.08.89 Patentblatt 89/35**

(84) Benannte Vertragsstaaten:
**AT BE CH DE ES FR GB GR IT LI LU NL SE**

(71) Anmelder: **Rigert Maschinenbau AG**
**Beim Eichli**
**CH-6405 Immensee / SZ(CH)**

(72) Erfinder: **César, Rigert**
**Breitgasse 30**
**CH-6415 Arth a/S(CH)**

(74) Vertreter: **Blum, Rudolf Emil Ernst et al**
**c/o E. Blum & Co Patentanwälte Vorderberg**
**11**
**CH-8044 Zürich(CH)**

(54) **Vorrichtung zur Uebertragung eines Drehmomentes und Aufzuganlage mit einer solchen Vorrichtung.**

(57) Die Vorrichtung enthält eine erste Einrichtung zur kraftschlüssigen Uebertragung des Drehmomentes, die eine Abtriebseinrichtung mit einem ersten und zweiten Glied (8,9) und eine zwischen diesen angeordnete Antriebseinrichtung mit Wälzkörpern (10), die in einem Käfig (11) gehalten sind, und eine zweite Einrichtung die zur Abbremsung als Bremskörper (41) ausgebildet und zwischen dem ersten und zweiten Glied ragt, um eine selbsthemmende Wirkung zu erzielen.

Die Vorrichtung kann zwischen einem Antriebsmotor und einer zu treibenden Einrichtung bei einem Aufzug verwendet werden.

Fig.1

EP 0 330 133 A2

## Vorrichtung zur Uebertragung eines Drehmomentes und Aufzuganlage mit einer solchen Vorrichtung

Die vorliegende Erfindung betrifft eine Vorrichtung zur Uebertragung eines Drehmomentes und eine Aufzuganlage mit einer solchen Vorrichtung.

Es ist bekannt, verschiedene mittels Antriebsmaschinen betriebene Anlagen, insbesondere Aufzuganlagen aus sicherheitstechnischen Gründen, mit einer Einrichtung z.B. Schneckengetriebe zu versehen, die selbsthemmende Eigenschaften haben. Ein Schneckengetriebe hat aber den Nachteil, dass der Wirkungsgrad gering ist.

Aufgabe der Erfindung ist es eine Vorrichtung zur Uebertragung eines Drehmomentes zu schaffen, die als selbsthemmende Vorrichtung mit optimalem Wirkungsgrad wirkt. Diese Aufgabe wird erfindungsgemäss mit den kennzeichnenden Merkmalen des Anspruches 1 gelöst.

Die mit der Erfindung erreichbaren Vorteile sind im wesentlichen darin zu sehen, dass durch die Wirkung der Vorrichtung als Bremse bei gleichem Drehmoment auf der Antriebs- und Abtriebsseite die Vorrichtung als Betriebsbremse und als Sicherheitsorgan bei Unterbrüchen auf der Antriebsseite wirkt und dass die Vorrichtung beliebig in ein Antriebssystem einbaubar ist.

Bei einem Ausführungsbeispiel weist die erste Einrichtung einen Antriebseinrichtung mit einem ersten und zweiten Glied und eine zwischen diesen angeordnete Antriebseinrichtung mit mindestens einem Wälzkörper, die axial verschiebbar angeordnet sind, und eine Spannvorrichtung auf, die das erste Glied und zweite Glied elastisch gegen den Wälzkörper vorspannt, um das zu übertragende Drehmoment bzw. die Bremskraft einzustellen. Dies hat den Vorteil, dass das Drehmoment einfach innerhalb durch die Auslegung der Vorrichtung bestimmten Grenzen eingestellt werden kann.

Eine Aufzuganlage mit einer Vorrichtung ist erfindungsgemäss durch den Anspruch 11 gekennzeichnet.

Die Vorteile dieser Aufzuganlage bestehen im wesentlichen darin, dass bei Aufzuganlagen, die von Drehstrommotoren angetrieben werden, das Schneckengetriebe durch die Vorrichtung ersetzt und folglich der Wirkungsgrad verbessert wird und bei Aufzuganlagen, die durch regelbare Gleichstrommotoren angetrieben werden, die mechanische Bremsvorrichtung durch die Vorrichtung ersetzt wird.

Im folgenden wird ein Ausführungsbeispiel der Erfindung mit Bezug auf die beiliegenden Zeichnungen erläutert.

Es zeigen:

Figur 1 einen Schnitt durch ein Ausführungsbeispiel einer erfindungsgemässen Vorrichtung zur Uebertragung eines Drehmomentes,

Figur 2 eine perspektivische Ansicht des auseinandergezogen dargestellten Ausführungsbeispiels gemäss Figur 1,

Figur 3 ein schematisch dargestelltes Ausführungsbeispiel einer Schrägaufzuganlage mit einer Vorrichtung nach Figur 1, und

Figur 4 einen Schnitt entlang der Linie IV-IV in Figur 3, die die Treibvorrichtung zeigt.

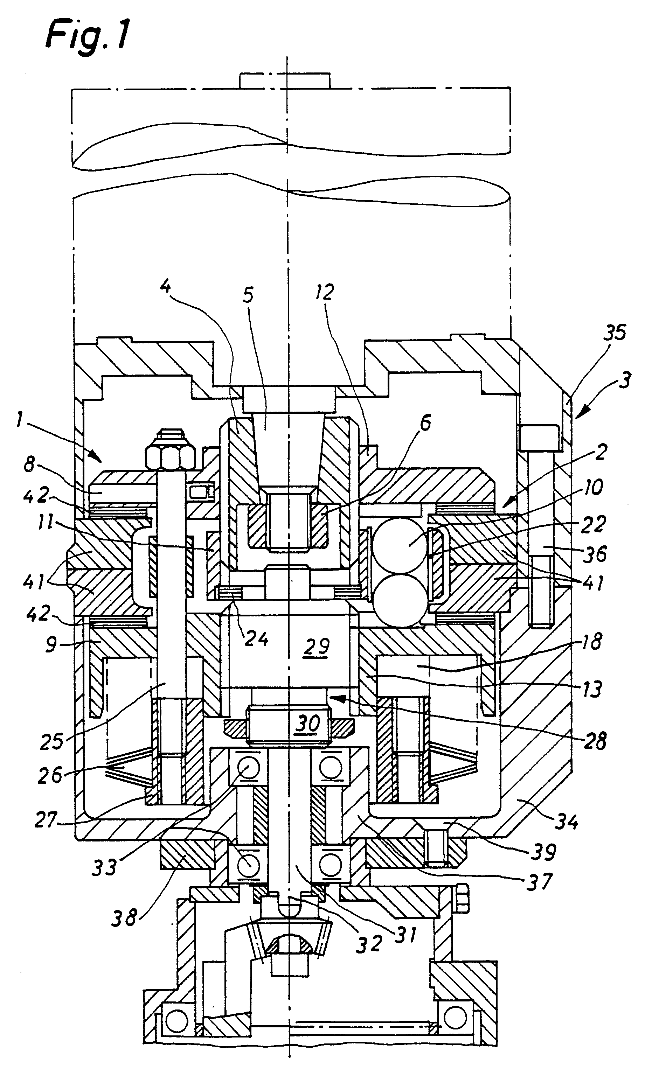

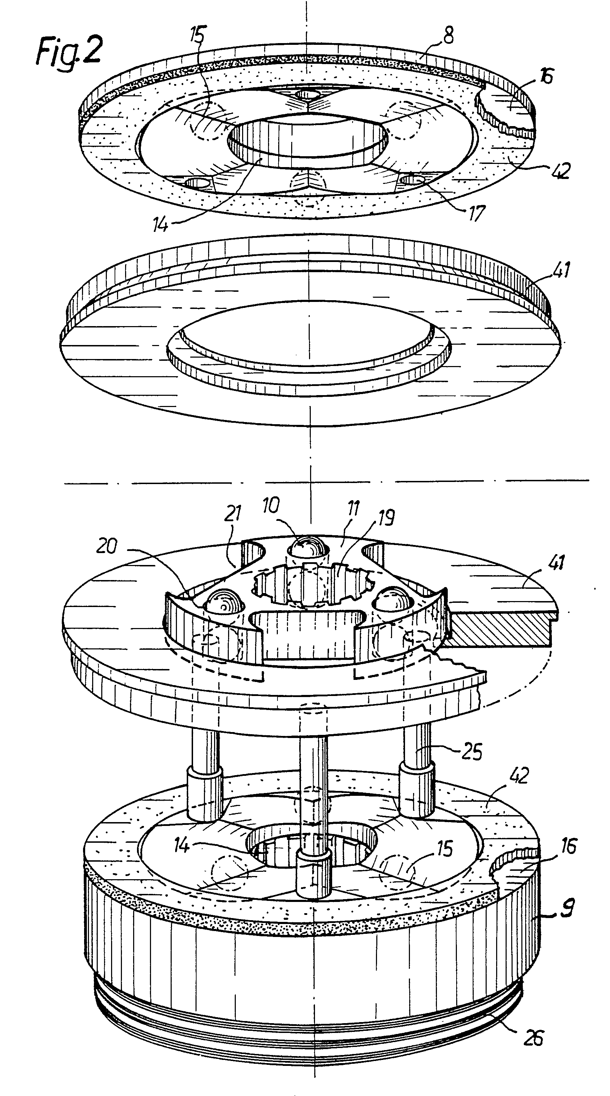

Geht man von der Funktionsweise aus, so besteht die in den Figuren 1 und 2 dargestellte Vorrichtung aus einer ersten Einrichtung 1 zur Uebertragung eines Dreh momentes, einer zweiten Einrichtung 2 zur Erzeugung einer selbsthemmenden Wirkung und einem Gehäuse 3, in dem die erste und zweite Einrichtung 1,2 angeordnet sind.

Beim gezeigten Ausführungsbeispiel ist auf der in Figur 1 oben dargestellten Antriebsseite ein Mitnehmerteil 4 vorgesehen, der mit der Antriebswelle 5 eines Antriebsmotors verbunden und mit einer Mutter 6 an der Abtriebswelle gesichert werden kann. Der Mitnehmerteil 4 ist als Welle einer Vielnutverbindung ausgebildet.

Die erste Einrichtung 1 umfasst eine Abtriebseinrichtung mit einem ersten Glied 8 und einem zweiten Glied 9 und eine Antriebseinrichtung mit Uebertragungselementen 10, die zwischen dem ersten und zweiten Glied 8,9 angeordnet sind. Die Uebertragungselemente 10 werden von sechs paarweise zugeordneten Kugeln gebildet, die aufeinanderliegend in einem Käfig 11 gehalten sind.

Das erste und zweite Glied 8,9 sind scheibenförmig ausgebildet und haben eine Nabe 12,13 mit einer Bohrung 14. Die Bohrung in der Nabe 13 ist als Vielnutverbindung ausgestaltet. Die Glieder 8,9 sind auf einer Stirnseite identisch ausgebildet und so angeordnet, dass sie mit dieser Seite jeweils an drei der sechs paarweise zugeordneten Kugeln 10 anliegen. Wie Figur 2 zeigt, sind auf dieser Seite drei V-förmige Rillen 15 mit ebenen Wandflächen, die sich radial und unter einem Winkel von 120° zueinander über einen an die Bohrung 14 angrenzenden ringförmigen Bereich erstrecken, und eine ebene ringförmige Fläche 16, die angrenzend an den ringförmigen Bereich ausgebildet ist. Die Glieder 8,9 haben jeweils drei Durchgangslöcher 17, die unter einem Winkel von 120° zueinander beabstandet und um 60° bezüglich des Rillengrundes der Rillen 15 versetzt sind. Das zweite Glied 9 weist an der anderen Stirnseite eine ringförmige Ausnehmung 18 auf.

Der Käfig 11 hat eine Bohrung 19, die für die Vielnutverbindung ausgestaltet ist. Der Käfig 11 ist scheibenförmig und hat drei Bohrungen 29, die unter einem Winkel von 120° zueinander im Randbereich ausgebildet sind, und drei Ausnehmungen 21, die unter einem Winkel von 120° zueinander und um 60° bezüglich der Bohrungen 20 versetzt ausgebildet sind.

In den Bohrungen 20 ist eine Hülse 22 angeordnet, um die Reibung zwischen den Kugeln 10 und dem Käfig 11 zu vermindern. Ferner weist der Käfig 11 an der einen Seitenfläche eine kreisförmige Ausnehmung 23 zur Aufnahme einer Stützscheibe 24 auf. Die erste Einrichtung 1 enthält weiterhin drei Gewindebolzen 25, ein Paket aus Tellerfedern 26 und einen Stützring 27, um das erste Glied 8, das zweite Glied 9 und die Kugeln 10 gegenseitig federnd vorzuspannen.

Auf der Abtriebsseite ist eine Welle 28 vorgesehen, die an einem Ende einen Abschnitt 29, der wie der Mitnehmerteil 4 als Welle einer Vielnutverbindung ausgebildet ist, einen Gewindeabschnitt 30, der angrenzend an den verzahnten Abschnitt ausgebildet ist, einen zylindrischen Abschnitt 31, der angrenzend an den Gewindeabschnitt ausgebildet ist und am anderen Ende einen als Kupplungsglied ausgebildeten Abschnitt 32 aufweist. Die Welle 28 ist am zylindrischen Abschnitt 31 in zwei Wälzlagern 33 gelagert. Das Gehäuse 3 besteht aus einem Ober- und Unterteil 34,35, die durch Bolzen 36 miteinander verschraubt sind. Im Unterteil ist ein Ansatz 37 ausgebildet, in dem das eine Wälzlager 33 angeordnet ist, während das andere Wälzlager 33 in einem Lagerschild 38 angeordnet ist, das durch Schrauben 39 am Gehäuseunterteil 34 befestigt ist.

Die zweite Einrichtung 2 umfasst zwei Ringkörper 41 und zwei ringförmige Bremsscheiben 42. Die Ringkörper 41 sind im Unter- bzw. Oberteil 34,35 des Gehäuses 3 drehfest montiert. Die Bremsscheiben 42 sind auf der ebenen Fläche 18 des ersten bzw. zweiten Gliedes 8,9 aufgeklebt. Wie Figur 1 zeigt, sind die Ringkörper 41 am Gehäuse 3 so befestigt, dass sie zwischen den Bremsscheiben 42 ragen und mit diesen in Kontakt bringbar sind.

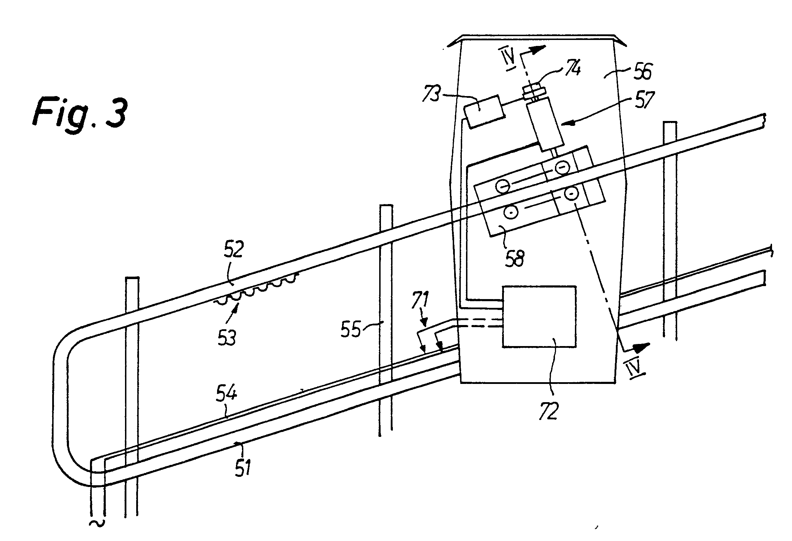

Bei dem in Figur 3 gezeigten Ausführungsbeispiel handelt es sich um eine Schrägaufzuganlage, bei der die vorstehend beschriebene Vorrichtung angewendet wird. Die Aufzuganlage umfasst eine Führungsschiene 51, eine mit einer Zahnstange 53 versehene Führungsschiene 52, eine Stromschienenanordnung 54, eine Anzahl von Stützen 55, an denen die Führungsschienen 51,52 und die Stromschienenanordnung 54 befestigt sind, eine Kabine 56, eine Antriebsvorrichtung 57 und eine Geschwindigkeitsüberwachungsvorrichtung 58, wobei letztere an der Kabine 56 montiert sind.

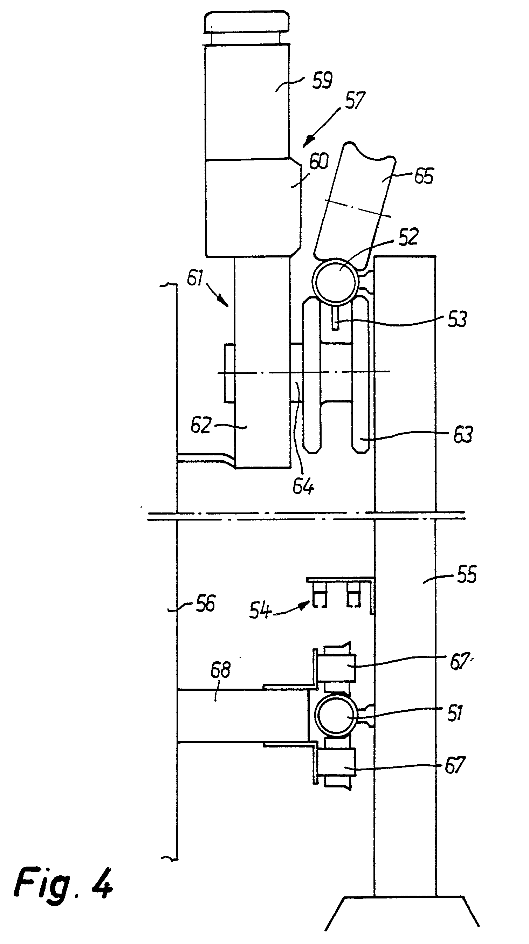

Wie insbesondere aus Figur 4 ersichtlich ist, enthält die Antriebsvorrichtung 56 einen Antriebsmotor 59, eine Vorrichtung zur Uebertragung des Drehmomentes, die eingangs mit Bezug auf die Figuren 1 und 2 beschrieben worden ist und mit der Bezugszahl 60 gekennzeichnet ist, und eine Treibvorrichtung 61, um die Kabine zu verfahren. Der Antriebsmotor ist ein stufenlos regulierbarer Gleichstrommotor, dessen Abtriebswelle (5; Figur 1) mit dem Mitnehmerteil (4, Figur 1) drehfest verbunden ist. Die Treibvorrichtung 61 enthält ein Untersetzungsgetriebe 62, das antriebsseitig mit dem Abschnitt (32, Figur 1) der Welle(28; Figur 1) formschlüssig verbunden ist, ein Treibrad 63, das auf der Abtriebswelle 64 des Untersetzungsgetriebes 62 montiert ist und mit der Zahnstange 53 kämmt, und eine Führungsrolle 65, die an einem nicht dargestellten Träger montiert ist und an der Führungsschiene 52 anliegt. Zur Führung der Kabine 56 sind ausserdem zwei Führungsrollen 67 an einem Träger 68 frei drehbar und einander gegenüberliegend so gehalten, dass diese Führungsrollen 67 an die Führungsschiene 51 anliegen.

Wie bereits erwähnt, ist der Antriebsmotor ein stufenlos regelbarer Gleichstrommotor 57 und im vorliegenden Fall ein Reihenschlussmotor. Die zum Betrieb erforderliche Energie wird über die Stromschienenanordnung zugeführt, durch einen Stromabnehmer 71 abgenommen und einem Leistungsteil 72 zugeführt. Dieser Leistungsteil 72 umfasst die erforderlichen Thyristoren und Ankerschaltgeräte und ist von an sich bekannter Bauart, so dass auf eine Beschreibung verzichtet werden kann. Neben diesem Leistungsteil ist eine Steuereinrichtung 73 zum Betrieb der Aufzuganlage vorgesehen, wobei diese auch die am Antriebsmotor montierte Bremseinrichtung 74 speist, die beim Stillstand der Kabine 56 in Betrieb gesetzt wird.

## Ansprüche

1. Vorrichtung zur Uebertragung eines Drehmomentes, gekennzeichnet durch eine erste Einrichtung (1) zur kraftschlüssigen Uebertragung des Drehmomentes, wenn zwischen Lastmoment und Antriebsmoment eine Differenz besteht, und durch eine zweite Einrichtung (2), die ortsfest bezüglich der ersten Einrichtung (1) angeordnet ist und die bei gleichem Last- und Antriebsmoment mit der ersten Einrichtung in Wirkverbindung ist, um eine selbsthemmende Wirkung zu erzeugen.

2. Vorrichtung nach Anspruch 1, dadurch gekennzeichnet, dass die erste Einrichtung (1) eine Abtriebseinrichtung mit einem ersten und zweiten Glied (8,9) und eine zwischen diesen angeordnete Antriebseinrichtung mit mindestens einem Wälzkörper (10), die axial verschiebbar angeordnet sind, und eine Spannvorrichtung (25,26,27) aufweist, die das erste Glied (8) und zweite Glied (9) elastisch gegen den Wälzkörper (10) vorspannt, um das zu übertragende Drehmoment bzw. die Bremskraft einzustellen.

3. Vorrichtung nach Anspruch 2, dadurch gekennzeichnet, dass die Antriebseinrichtung einen Käfig (11) aufweist, in dem der Wälzkörper (10) angeordnet ist.

4. Vorrichtung nach Anspruch 3, dadurch gekennzeichnet, dass der Käfig (11) und mindestens ein Glied (8,9) der Abtriebseinrichtung als Organe der Kraftübertragung ausgebildet sind.

5. Vorrichtung nach Anspruch 4, dadurch gekennzeichnet, dass der Käfig (11) mindestens drei Wälzkörper (10) enthält, die in gleichen Abständen auf einer Kreislinie liegend angeordnet sind.

6. Vorrichtung nach Anspruch 5, dadurch gekennzeichnet, dass der Käfig (11) Wälzkörper (10) enthält. die paarweise zugeordnet sind.

7. Vorrichtung nach Anspruch 3, dadurch gekenn zeichnet, dass das erst und zweite Glied (8,9) eine der Anzahl von Wälzkörpern (10) entsprechende Anzahl von Rillen (15), die im wesentlichen V-förmig und radial verlaufenden an einer Seite der Glieder (8,9) ausgebildet sind, wobei die Glieder (8,9) zueinander so angeordnet sind, dass die Rollen (15) aneinander gegenüberliegen und die Wälzkörper (10) in den Rillen (15) liegen.

8. Vorrichtung nach Anspruch 7, dadurch gekennzeichnet, dass die Rille (15) einen gleichen oder ungleichen Flankenwinkel aufweist.

9. Vorrichtung nach Anspruch 7, dadurch gekennzeichnet, dass die Rollen (15) eben oder gekrümmte Flächen sind.

10. Vorrichtung nach Anspruch 1, dadurch gekennzeichnet, dass die zweite Einrichtung (2) in einem Gehäuse (3) so befestigt ist, dass Randabschnitte des ersten und zweiten Gliedes (8,9) mit der zweiten Einrichtung (2) in und ausser Anlage bringbar sind, um eine Bremswirkung zu erzielen.

11. Vorrichtung nach Anspruch 1, dadurch gekennzeichnet, dass die zweite Einrichtung (2) als zwei Bremskörper (41) ausgebildet und an der Gehäusewand befestigt sind, so dass er zwischen das erste und zweite Glied (8,9) ragt, und das erste und zweite Glied (8,9) an den einander zugewandten Seiten am Randbereich jeweils mit einer Bremsscheibe (42) versehen sind, die mit dem Bremskörper (2) in und ausser Kontakt bringbar ist.

12. Aufzuganlage mit einer Vorrichtung nach Anspruch 1, dadurch gekennzeichnet, dass die Vorrichtung (59) zwischen dem Antriebsmotor (56) und der Treibvorrichtung (57) der Antriebsvorrichtung (57) angeordnet ist.

13. Aufzuganlage nach Anspruch 12, dadurch gekennzeichnet, dass sie eine Schrägaufzuganlage mit mindestens einer Beförderungseinheit (56) ist, wobei die Antriebsvorrichtung (57) an der Einheit (56) befestigt ist und die Treibvorrichtung (67) als Zahnstangenantrieb ausgebildet ist.

14. Aufzuganlage nach Anspruch 13 mit zwei Führungsschienen (51,52) für die Einheit (56), dadurch gekennzeichnet, dass eine Führungsschiene (52) mit einer Zahnstange (53) versehen ist.

15. Aufzuganlage nach einem der Ansprüche 13 oder 14, dadurch gekennzeichnet, dass die Treibvorrichtung (61) ein Untersetzungsgetriebe (62), das an der Vorrichtung montiert ist, ein Treibrad (63), das mit der Zahnstange (53) kämmt, und ein Gegenrad (65) aufweist, um das Treibrad (63) und die Zahnstange (53) in Eingriff zu halten.

# Fig.1

Fig.2

# Fig. 3

*Fig. 4*